# EUROPÄISCHE PATENTANMELDUNG

(11) **EP 4 134 760 A1**
(43) Veröffentlichungstag der Anmeldung: **15.02.2023**
(21) Anmeldenummer: 21190330.7
(22) Anmeldetag: 09.08.2021
(51) Int. Cl.: G05B 19/042, G05B 19/05, G06F 8/34, G05B 19/4093, G06F 8/30

(54) **VERFAHREN ZUR UNTERSTÜTZUNG EINER TEXTUELLEN ERSTELLUNG EINES PROGRAMMS UND EINGABEUMGEBUNG**

(71) Anmelder: Siemens Aktiengesellschaft, 80333 München (DE)
(72) Erfinder: Gäbel, Kai, 09117 Chemnitz (DE); Horn, Wolfgang, 09337 Hohenstein-Ernstthal (DE); Jarosz, Piotr, 09122 Chemnitz (DE); Scherf, Thomas, 09244 Lichtenau (DE); Schneider, Sven, 09123 Chemnitz (DE)

(57) **Zusammenfassung**

Die Erfindung betrifft ein Verfahren zur Unterstützung bei einer textuellen Erstellung eines Programms (P) durch einen Anwender (1), wobei in einer Eingabeumgebung (2) ein Programmtext umfassend Programmzeilen (PZ), welche wiederum Anweisungen (AW) aufweisen, eingegeben wird, wobei die Eingabeumgebung (2) derart betrieben wird, dass die jeweilige Eingabe einer Anweisung (AW) auf Schlüsselwörter (Sᵢ) hin überprüft wird, und wenn die Überprüfung ergibt, dass die Anweisung (AW) ein Schlüsselwort (Sᵢ) ist, wird eine Darstellung des Schlüsselwortes (Si) oder ein Bereich (4) in unmittelbarer Umgebung zu dem Schlüsselwort (Si) derart aktiviert, dass eine Interaktion des Anwenders (1) mit der Darstellung oder dem Bereich (4) einen in den Programmtext eingebetteten Dialogbereich (3) öffnet, dabei wird das Schlüsselwort (Si) einem Technologiebefehl (TB) zugeordnet, wobei für diesen Technologiebefehl (TB) eine Struktur (ST) mit einer Mehrzahl von Parametern (xᵢ) existiert, welche über den Dialogbereich (3) eingestellt werden und in dem entsprechenden Programmtext Abschnitt als textuelle Form übernommen werden, und somit eine Eingabe der Parameter (xᵢ) für den Technologiebefehl (TB) vereinfacht wird.

## Beschreibung

Die Erfindung betrifft ein Verfahren zur Unterstützung bei einer textuellen Erstellung eines Programms durch einen Anwender, wobei in einer Eingabeumgebung ein Programm umfassend Programmzeilen, welche wiederum Anweisungen aufweisen, eingegeben werden.

Des Weiteren betrifft die Erfindung eine Eingabeumgebung ausgestaltet zur textuellen Erstellung eines Programms durch einen Anwender, wobei ein Programmtext umfassend Programmzeilen, welche wiederum Anweisungen aufweisen, eingebbar ist.

Eine textuelle Programmierung auf Basis von Technologiebefehlen bietet umfangreiche Programmiermöglichkeiten, beispielsweise für die Verfahrwege von Robotern und CNC Maschinen. Eine Aufbereitung der technologischen Inhalte von den technologischen Befehlen ist allerdings besonders mühsam, weil die technologischen Befehle eine Vielzahl von Parametern aufweisen. Wird ein technologischer Befehl in einen Editor implementiert, so folgt üblicherweise in Klammern gesetzt, eine Parameterliste, welche leicht unübersichtlich wird. Neben eigentlichen Kenngrößen der Anweisungen, wie beispielsweise einen Zielpunkt einer Bewegung müssen zahlreiche Nebenbedingungen eingegeben werden. Somit sind bei der Parametrierung von technologischen Befehlen zahlreiche Argumente mit Wertangaben zu belegen, was für einen Anwender Schwierigkeiten beim Programmieren und Lesen des Quelltextes bereitet. Es ist Expertenwissen über die Argumente und deren Bedeutung sowie der Bedeutung der dort angegebenen Werte notwendig.

Es ist Aufgabe der vorliegenden Erfindung einem Anwender die Erstellung eines Programms, insbesondere mit technologischen Befehlen, zu vereinfachen.

Die Aufgabe wird erfindungsgemäß dadurch gelöst, dass die Eingabeumgebung derart betrieben wird, dass die jeweilige Eingabe einer Anweisung auf Schlüsselwörter hin überprüft wird, wenn die Überprüfung ergibt, dass die Anweisung ein Schlüsselwort ist, wird eine Darstellung des Schlüsselwortes oder ein Bereich in unmittelbarer Umgebung zu dem Schlüsselwort derart aktiviert, dass eine Interaktion des Anwenders mit der Darstellung oder dem Bereich einen in den Programmtext eingebetteter Dialogbereich öffnet, dabei wird das Schlüsselwort einem Technologiebefehl zugeordnet, wobei für diesen Technologiebefehl eine Struktur mit einer Mehrzahl von Parametern existiert, welche über den Dialogbereich eingestellt werden und in dem entsprechenden Programmtext Abschnitt als textuelle Form übernommen werden, und somit eine Eingabe der Parameter für den Technologiebefehl vereinfacht wird.

War zuvor für die technologische Eingabe von zahlreichen Parametern eine komplizierte Syntaxdefinition, wie sie z.B. aus der C-Programmierung in Funktionsaufrufen bekannt ist, notwendig. Hat man nun eine Aufbereitung der technologischen Inhalte für die Technologiebefehle in einem Dialogbereich mit Eingabefenstern transformiert. Da insbesondere die Programmierung von technologischen Abläufen eine Vielzahl und umfangreiche Parametrierung der jeweiligen Anweisungen erfordert, ist es nun übersichtlicher in dem Dialogbereich mit zusätzlichen Hilfetexten die notwendigen Parameter einzugeben. In Verbindung mit einer textuellen Programmierung sind nun in einen Editor eine visuelle menügesteuerte Eingabe sowie eine Texteingabe zur Programmierung möglich.

Die so geschaffene oder betriebene Eingabeumgebung bzw. ein so betriebener oder geschaffener Editor, hat nun einen entscheidenden Funktionalitätsvorteil. Denn, ein Benutzer kann über die Benutzerschnittstelle die Vielzahl an Parametern für Technologiebefehle leicht wahrnehmen und steuern. Die neue Benutzeroberfläche in den Editor teilt dem Anwender das Vorhandensein von Funktionen, Technologiebefehlen und deren Parametern aktiv mit, so dass diese von dem Anwender wahrgenommen werden können und leicht in dem Programm umgesetzt werden können. Die neu geschaffene Benutzeroberfläche hilft dem Anwender auch bei einem Verständnis von einem möglichen Einsatz für Technologiebefehle und deren Steuerung, der Dialogbereich unterstützt den Anwender bei der Programmierung. Der neue Editor bzw. die neue Eingabeumgebung ist damit sehr effektiv und gebrauchstauglich.

Die visuellen Elemente in dem Dialogbereich stellen eine Verbindung zur Syntax der Technologiebefehle dar. In Abbildungstabellen wird jedem visuellen Element eine gültige Syntax zugeordnet.

Eine Benutzerfreundlichkeit wird weiter erhöht, wenn die angezeigten Dialogbereiche bei einem Scrollen des Programmtextes gemeinsam mit den Text verschoben werden können.

Eine weitere Verbesserung des Verfahrens sieht vor, mit dem Dialogbereich eine funktionale Sicht auf die Syntax des Technologiebefehls bereitzustellen und Änderungen mittels des Dialogbereichs in der Dialogdarstellung werden in der Textdarstellung unmittelbar bei der Eingabe synchronisiert. Das bedeutet, hat man eine Anweisung eingegeben und wurde für die Anweisung ein Schlüsselwort interpretiert bzw. ein passender Technologiebefehl bereitgestellt, so hat der Anwender die Möglichkeit den passenden Dialogbereich beispielsweise durch einen Doppelklick auf das Schlüsselwort zu öffnen. Gibt der Anwender nun in den Dialogbereich die passenden Parameter ein, so werden sie sofort in dem Funktionskopf des Technologiebefehls sichtbar.

Dabei kann ein Dialogbereich mit seinen Eingabefeldern einen betreffenden Quelltextabschnitt ersetzen oder gemeinsam mit diesen dargestellt werden. So kann man leichter Technologieobjekten Konfigurationsdaten zuordnen und insbesondere für Werkzeugmaschinen, wie z.B. CNC-Maschinen, eine effektive Werkzeugbahnplanung projektieren.

Eine noch weitere Verbesserung für das Verfahren wird dadurch erreicht, wenn eine Funktionsweise und/oder eine technologische Bedeutung der Parameter in einer Hilfsgrafik dem Anwender erläutert wird.

Vorteilhafter Weise findet das Verfahren Anwendung bei Programmen für Bearbeitungsvorgänge an einem Werkstück oder zur Bewegungsführung von Handhabungssystem und/oder einem Roboter, welche eine Strecken- und Bahnsteuerung erfordern. Denn, insbesondere bahnorientierte Befehle bzw. Bearbeitungstechnologien für bahngesteuerte CNC-Maschinen bzw. für die Bewegungsführung von Robotern bzw. Handhabungssystemen sind bezüglich ihrer Parameter sehr umfangreich.

Die eingangs genannte Aufgabe wird ebenfalls durch eine Eingabeumgebung, ausgestaltet zur textuellen Erstellung eines Programms durch einen Anwender, gelöst. Wenn ein Programmtext umfassend Programmzeilen, welche wiederum Anweisungen aufweisen, eingegeben wird, zur Unterstützung bei der textuellen Erstellung des Programms bei der Eingabe einer Anweisung, diese auf Schlüsselwörter überprüft, und wenn die Überprüfung ergibt, dass die Anweisung ein Schlüsselwort ist, wird eine Darstellung des Schlüsselwortes oder einen Bereich in unmittelbarer Umgebung zu dem Schlüsselwort für eine Interaktion des Anwenders mit der Darstellung oder den Bereich vorbereitet, weiterhin ist die Eingabeumgebung ausgestaltet die Interaktion zu erkennen und einen in den Programmtext eingebetteten Dialogbereich zu öffnen, wobei das Schlüsselwort einen Technologiebefehl zugeordnet ist und für diesen Technologiebefehl eine Struktur mit einer Mehrzahl von Parametern existiert, dabei ist der Dialogbereich ausgestaltet, die Parameter anzuzeigen und vom Anwender anzupassen, zu ändern oder zu ergänzen lassen, weiterhin ausgestaltet den parametrierten Technologiebefehl in dem entsprechenden Programmtext Abschnitt als textuelle Form zu übernehmen.

Da mit der neuen Eingabeumgebung bzw. den Editor nun über den Dialogbereich eingegebenen Parameter für den Technologiebefehl in einfacher Form übernommen werden, hat man einen Anwender eine große Unterstützung bei einer textuellen Erstellung eines Programms an die Hand gegeben.

Die Benutzerfreundlichkeit von der Eingabeumgebung wird dadurch erhöht, dass der angezeigte Dialogbereich bei einem Scrollen eines Programmtextes gemeinsam mit dem Text verschiebbar ist.

Die Eingabeumgebung wird in einer weiteren Ausgestaltung dadurch verbessert, dass der Dialogbereich ausgestaltet ist, eine funktionale Sicht auf die Syntax des Technologiebefehls bereitzustellen, dabei ist die Eingabeumgebung weiterhin ausgestaltet, Änderungen, welche mittels des Dialogbereichs in der Dialogdarstellung gemacht werden, für die Textdarstellung aufzubereiten und unmittelbar bei der Eingabe zu synchronisieren und anzuzeigen.

Die Eingabeumgebung ist weiterhin ausgestaltet, die Funktionsweise und/oder eine technologische Bedeutung der Parameter in einer Hilfsgrafik dem Anwender zu erläutern.

Die Benutzerfreundlichkeit wird um ein weiteres nochmals verbessert, wenn die Hilfsgrafik mit zusätzlichen Grafikelementen ausgestaltet ist und der Anwender in der Hilfsgrafik durch Verschieben der Grafikelemente, welche mit den Parametern in einer Wechselwirkungsbeziehung stehen, die Parameterwerte ändern kann.

Vorteilhafterweise findet sich die Eingabeumgebung in einem Engineeringsystem wieder und die Eingabeumgebung ist insbesondere dazu ausgestaltet, für die Programmierung von industriellen Steuerungen für Bearbeitungsvorgänge an einem Werkstück oder zur Bewegungsführung von Handhabungssystemen oder einem Roboter, welche eine Strecken- und Bahnsteuerung erfordern.

### Weitere Vorteile sind folgende:

Es erfolgt eine unmittelbare Verbindung von textueller Programmierung mit grafischer Parametrierunterstützung in einem Editor. Damit ergibt sich eine nahtlose Verbindung von Textdarstellung und funktionaler Sicht. Man hat nun eine übersichtliche und einfache Programmierung wahlweise textuell oder mit entsprechender grafischer Unterstützung auf funktionaler Ebene.

Die Zuschaltung der grafischen Elemente ist jederzeit und in beliebigem Umfang möglich. Gemischtes Arbeiten (Programmierung und Parametrierung) erfolgt in einem Editor.

Eine Anbindung an weiterführende technologische Verfahren ist einfach über die Elemente der funktionalen Sicht in dem Dialogbereich möglich.

Das Verfahren ist insbesondere in Touch Umgebungen effizient einzusetzen, eignet sich jedoch auch zur Unterstützung in Desktop-Umgebungen.

Für den Programmierer ergeben sich folgende weitere Vorteile:

### Es wird zu

- Funktionsbezeichnern,
- Parameterbezeichnern,
- Notwendigkeit von Parameterangaben bzw. Default-Verhalten bei Nichtangabe,
- Bedeutung numerischer Parametrierwerte keine Kenntnisse erforderlich,

Funktionsbezeichner werden automatisch angepasst. Numerische Parametrierwerte werden über die technologische Bedeutung (textuelle Bezeichnung) in dem Dialogbereich dargestellt. Funktionen werden in der richtigen Parameterreihenfolge abgefüllt. Per Defaultwert angegebene Parameter werden aus der programmierten Anweisung entfernt, wodurch die Übersichtlichkeit in der textuellen Ansicht erhöht wird. Die Funktionsweise und die Bedeutung von Parametern der technologischen Befehle können über Hilfsgrafiken dem Nutzer erläutert werden. Die Zeichnung zeigt ein Ausführungsbeispiel der Erfindung. Dabei zeigen:
- FIG 1: einen Anwender mit einer Eingabeumgebung,
- FIG 2: die Eingabeumgebung innerhalb eines Engineeringsystems,
- FIG 3: die Eingabeumgebung mit einem Programmtext und einem aufgeblendeten Dialogfenster mit einem nebengeordneten 3D-Portal am Beispiel eines Deltapickers,
- FIG 4: einen Dialogbereich in einer ersten Ausgestaltungsvariante,
- FIG 5: einen Dialogbereich in einer zweiten Ausgestaltungsvariante.

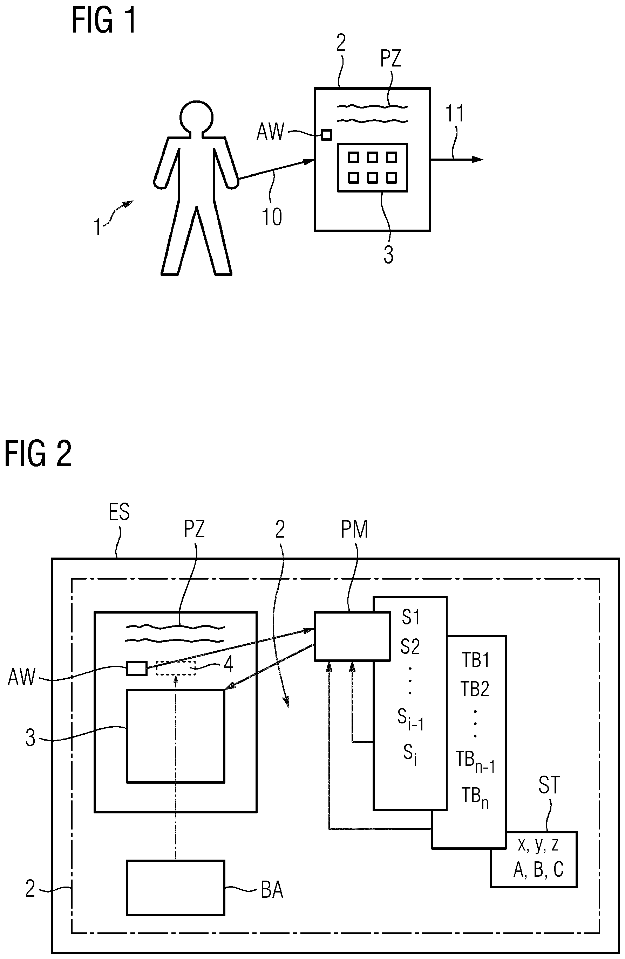

Gemäß FIG 1 ist ein Anwender 1 dargestellt, welcher vor einer Eingabeumgebung 2 durch Handeingabe 10 ein textuelles Programm erstellen möchte. Der Anwender 1 kann in die Eingabeumgebung 2 Programmzeilen PZ, welche wiederum Anweisungen AW aufweisen, eingeben. Nun wird zur Erleichterung der Programmierung die Eingabeumgebung 2 derart betrieben, dass die jeweilige Eingabe einer Anweisung AW auf Schlüsselwörter Si (siehe FIG 2) hin überprüft wird.

Sollte ein Schlüsselwort Si erkannt worden sein, so kann der Anwender 1 einen Dialogbereich 3 öffnen. Über den Dialogbereich 3 kann der Anwender 1 eine Mehrzahl von Parametern Xᵢ eingeben, welche anschließend in dem entsprechenden Programmabschnitt als textuelle Form übernommen werden, und somit eine Eingabe der Parameter xᵢ für einen Technologiebefehl TB vereinfacht wird.

Mit der FIG 2 ist die Eingabeumgebung 2 innerhalb eines Engineeringsystems ES als Blockschaltbild dargestellt. Mit einem Editor der Eingabeumgebung 2 können Programmzeilen PZ textuell eingegeben werden. Gibt der Anwender 1 in einer Programmzeile PZ eine Anweisung AW ein, so wird diese Anweisung AW mit einer Tabelle in der Schlüsselworte S₁,...,Sᵢ stehen, verglichen. Wird ein passendes Schlüsselwort Si gefunden, so wird in dem Editor ein Bereich 4 in unmittelbarer Umgebung zu dem Schlüsselwort Si oder das Schlüsselwort Si selbst für eine Interaktion mit dem Anwender 1 vorbereitet. Die Interaktion könnte beispielsweise ein Doppelklicken auf das Schlüsselwort Si oder auf den Bereich 4 sein. Der Editor bzw. die Eingabeumgebung 2 ist dann derart ausgestaltet, dass der Doppelklick auf den Bereich 4 oder auf das Schlüsselwort Si einen Dialogbereich 3 öffnet, welcher in den Programmtext eingebettet ist. Das erkannte Schlüsselwort Si ist einem Technologiebefehl TBᵢ zugeordnet, welche ebenfalls einer Tabelle TB₁,...,TBn für Technologiebefehle hinterlegt sind. Die Technologiebefehle TB₁,...,TBn weisen eine Struktur ST auf.

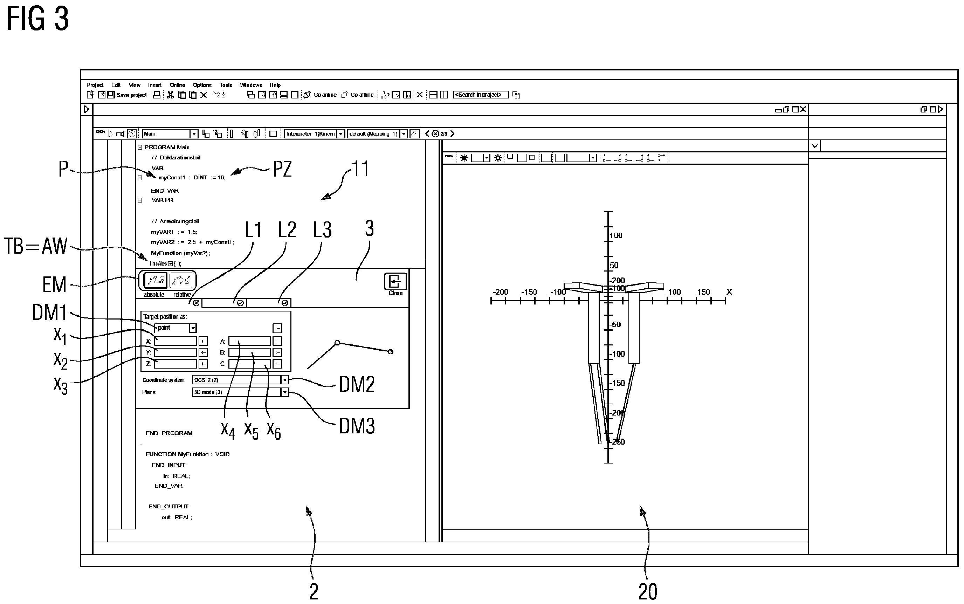

Der Dialogbereich 3 ist dazu ausgestaltet, die Parameter xᵢ (siehe Figuren 3,4 und 5) anzuzeigen und vom Anwender 1 anpassen zu lassen, zu ändern oder zu ergänzen.

Die Vorbereitung der Interaktion für den Anwender 1 wird über ein Bildaufbaumittel BA realisiert. Weiterhin ist ein Prüfmittel PM vorhanden, welches die eingegebenen Anweisungen AW auf die Schlüsselworte Si hin überprüft. Das Prüfmittel PM steht mit dem Bildaufbaumittel BA datentechnisch in Verbindung und kann so in dem Editor die Interaktion ansteuern.

Gemäß FIG 3 ist ein möglicher Bildschirmaufbau eines Engineeringsystems ES dargestellt. Links befindet sich die Eingabeumgebung 2 und rechts ist ein 3D-Portal 20 dargestellt, in welchen man für umfangreiche Funktionsparameter gleich die Auswirkungen für eine eventuelle Bahnführung erkennen kann.

In der Eingabeumgebung 2 befindet sich ein Programm P mit Programmzeilen PZ, wobei die Programmzeilen PZ aus einzelnen Anweisungen AW zusammengesetzt werden. In der Zeile 15 wurde die Anweisung "lin_abs" eingegeben, wobei die Eingabeumgebung 2 derart ausgestaltet ist, dass sie dieses als Schlüsselwort Si und somit als einen Technologiebefehl erkennt, wodurch für den Anwender 1 die Möglichkeit geschaffen wird, beispielsweise auf das jetzt fett gedruckte Schlüsselwort zu Klicken, wodurch sich wiederum der Dialogbereich 3 öffnet. In den Dialogbereich 3 gibt es als erstes eine Auswahlmöglichkeit für eine Eingabemethode EM, hier kann für eine absolute oder relative Eingabe der Dialogbereich vorbereitet werden. In einer ersten Darstellung weist der Dialogbereich eine erste Lasche L1, eine zweite L2 und eine dritte Lasche L3 auf. Die erste Lasche L1 bringt eine Anzeige für Basisparameter. In dieser Anzeige für Basisparameter können die Parameter x₁,...,x₆ eingegeben werden. Ein erster Parameter x₁ symbolisiert beispielsweise eine x-Position, ein zweiter Parameter x₂ symbolisiert eine y-Position und ein dritter Parameter x₃ symbolisiert eine z-Position. Die Parameter x₄,x₅,x₆ geben dann den Endpunkt für die Linearbewegung des Punktes an. So symbolisiert ein vierter Parameter x₄ den Endpunkt A, ein fünfter Parameter x₅ den Endpunkt B und ein sechster Parameter x₆ den Endpunkt C. Über ein erstes Dropdown-Menü DM1 kann eine Targetposition ausgewählt werden. Über ein zweites Dropdown-Menü DM2 kann ein entsprechendes Koordinatensystem ausgewählt werden und über ein drittes Dropdown-Menü DM3 kann eine Ansicht in dem 3D-Portal 20 vorgewählt werden.

Ein weiterer Technologiebefehl hat eine sehr komplexe Syntaxdefinition, wie im Folgenden beschrieben;

Syntaxdefinition für eine Zirkularbewegung:
circAbs(<pos>
[,auxPos := <val>] [,v := <val>] [,a := <val>]
[,d := <val>] [,j := <val>] [,plane := <val>]
[,dir := <val>] [,oDir := <val>] [,mode := <val>]
[,ar := <val>] [,cr := <val>] [,trans := <val>]
[,blendDist := <val>] [,cs := <val>] );

Beispiel Anwendung eines Technologischen Befehls in textueller Form:
// Kreisbewegung über Endpunkt, Mittelpunkt und Winkel
// Wertevorgaben über Variable, Dynamikangaben per modalen
// Wert
// circAbs( endPoint, auxPos := centerPoint, mode := 1, ar := // angle);
// Kreisbewegung über Endpunkt, Mittelpunkt und Winkel
// Endpunktangabe als direkte Positionsvorgabe circAbs(
(x := 10.0, y := 40.0, z := 30.0),
auxPos := centerPoint,
mode := 1, ar := 10.0 );

Wie gezeigt, ist die Syntax Definition und die textuelle Beschreibung eines Technologiebefehls am Beispiel des Technologiebefehls circAbs() bereits sehr umfangreich.

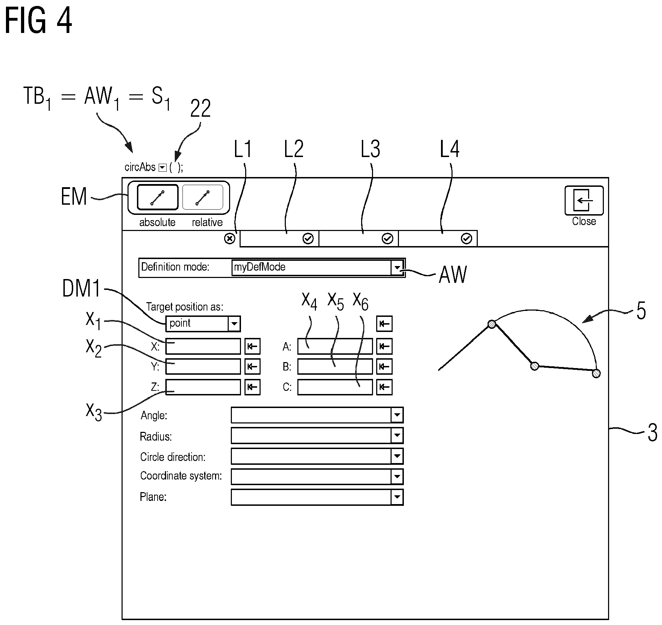

Mit der FIG 4 wird die Eingabeerleichterung für den Technolgiebefehl circAbs() gezeigt. Der Dialogbereich zeigt eine erste Lasche L1 für Basisparameter, eine zweite Lasche L2 für mögliche Dynamisierungen, eine dritte Lasche L3 für eine Einstellung der Orientierung im Raum und eine vierte Lasche L4 für eine Vermischung. Über ein Auswahlmenü AW kann ein Definitionsmodus eingestellt werden. Bei der FIG 4 wird der Definitionsmodus "Endpoint and radius" eingestellt.

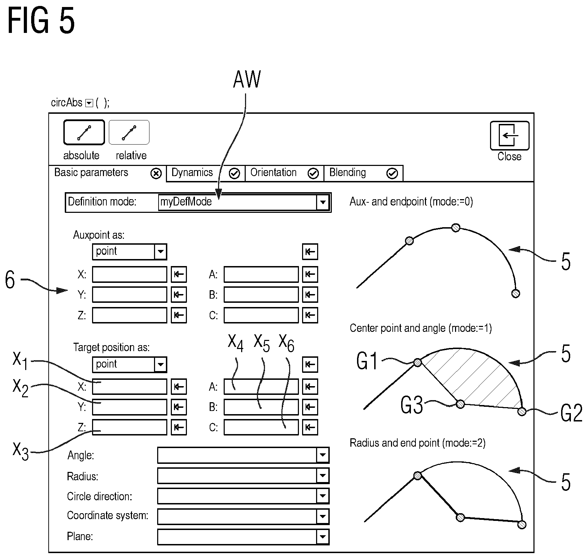

Bei der FIG 5 ist der Definitionsmodus "myDefMode" über eine freigestaltbare Variable vorgegeben.

Bezogen auf FIG 4 wurde der Technologiebefehl TB1 nur als Schlüsselwort eingegeben, eine zugehörige Parameterliste "()" 22 ist leer. Ein Anwender 1 bekommt nun aber angezeigt, welche Parameter in die leere Parameterliste 22 zu füllen sind.

Über das erste Dropdown-Menü DM1 kann er die Targetposition Punkte eingeben und kann somit über die Parameter x₁,x₂,x₃ die entsprechende Ausgangspunktkoordinaten x,y,z eingeben und über die Parameter x₄,x₅,x₆ kann er die Endposition des Punktes A,B,C eingeben. Darüber hinaus können über Auswahl-Menüs Radius, Circle direction, coordinate system and plane eingegeben werden.

Rechts neben den Eingabefeldern kann zusätzlich zur Hilfestellung eine Hilfsgrafik 5 angezeigt werden. Die Hilfsgrafik 5 zeigt die Position von möglichen Start- und Endpunkten und einen Mittelpunkt an.

Gemäß FIG 5 ist eine erweitere Darstellung des Dialogbereichs 3 aus FIG 4 abgebildet. Der Dialogbereich 3 gemäß FIG 4 ist nun in einen Definitionsmodus "myDefMode" dargestellt. Zusätzlich zu den Punktekoordinaten x,y,z und Zielkoordinaten A,B,C kann nun über ein Hilfseingabefeld 6 zusätzlich noch die Koordinaten für einen Hilfspunkt eingegeben werden.

Die rechts neben den Eingabefeldern angeordneten Hilfsgrafiken 5 weisen zum Teil ein erstes Grafikelement G1, ein zweites Grafikelement G2 und ein drittes Grafikelement G3 auf. Die Eingabeumgebung 2 ist mit seinem Dialogbereich 3 nun derart ausgestaltet, dass der Anwender 1 in der Hilfsgrafik 5 durch verschieben der Grafikelemente G1,G2,G3, welche mit den Parametern x₁,x₂,x₃ in einer Wechselwirkungsbeziehung stehen, die Parameterwerte zu ändern.

## Patentansprüche

1. Verfahren zur Unterstützung bei einer textuellen Erstellung eines Programms (P) durch einen Anwender (1), wobei in einer Eingabeumgebung (2) ein Programmtext umfassend Programmzeilen (PZ), welche wiederum Anweisungen (AW) aufweisen, eingegeben wird, wobei die Eingabeumgebung (2) derart betrieben wird, dass die jeweilige Eingabe einer Anweisung (AW) auf Schlüsselwörter (Si) hin überprüft wird, und wenn die Überprüfung ergibt, dass die Anweisung (AW) ein Schlüsselwort (Si) ist, wird eine Darstellung des Schlüsselwortes (Si) oder ein Bereich (4) in unmittelbarer Umgebung zu dem Schlüsselwort (Si) derart aktiviert, dass eine Interaktion des Anwenders (1) mit der Darstellung oder dem Bereich (4) einen in den Programmtext eingebetteten Dialogbereich (3) öffnet, dabei wird das Schlüsselwort (Si) einem Technologiebefehl (TB) zugeordnet, wobei für diesen Technologiebefehl (TB) eine Struktur (ST) mit einer Mehrzahl von Parametern (xᵢ) existiert, welche über den Dialogbereich (3) eingestellt werden und in dem entsprechenden Programmtext Abschnitt als textuelle Form übernommen werden, und somit eine Eingabe der Parameter (xᵢ) für den Technologiebefehl (TB) vereinfacht wird.

2. Verfahren nach Anspruch 1, wobei der angezeigte Dialogbereich (3) bei einem Scrollen des Programmtextes gemeinsam mit dem Text verschoben wird.

3. Verfahren nach Anspruch 1 oder 2, wobei mit dem Dialogbereich (3) eine funktionale Sicht auf die Syntax des Technologiebefehls (TB) bereitgestellt wird und Änderungen mittels des Dialogbereich (3) in der Dialogdarstellung werden für die Textdarstellung unmittelbar bei der Eingabe synchronisiert.

4. Verfahren nach einem der Ansprüche 1 bis 3, wobei die eine Funktionsweise und/oder eine technologische Bedeutung der Parameter (xᵢ) in einer Hilfsgrafik (5) dem Anwender (1) erläutert wird.

5. Verfahren nach einem der Ansprüche 1 bis 4, wobei das Programm (P) für Bearbeitungsvorgänge an einem Werkstück oder zur Bewegungsführung von Handhabungssystemen und/oder einem Robotern, welche eine Strecken- und Bahnsteuerung erfordern, geschrieben wird.

6. Eingabeumgebung (2) ausgestaltet zur textuellen Erstellung eines Programms (P) durch einen Anwender (1), wobei ein Programmtext umfassend Programmzeilen (PZ), welche wiederum Anweisungen (AW) aufweisen, eingebbar ist, weiterhin ausgestaltet zur Unterstützung bei der textuellen Erstellung des Programms (P) bei der Eingabe einer Anweisung (AW) diese auf Schlüsselwörter (Sᵢ) zu überprüfen, und wenn die Überprüfung ergibt, dass die Anweisung (AW) ein Schlüsselwort (Si) ist, eine Darstellung des Schlüsselwortes (Sᵢ) oder ein Bereich (4) in unmittelbarer Umgebung zu dem Schlüsselwort (Sᵢ) für eine Interaktion des Anwenders (1) mit der Darstellung oder dem Bereich (4) vorzubereiten,
weiterhin ausgestaltet die Interaktion zu erkennen und einen in den Programmtext eingebetteten Dialogbereich (3) zu öffnen, wobei das Schlüsselwort (Sᵢ) einem Technologiebefehl (TB) zugeordnet ist, und für diesen Technologiebefehl (TB) eine Struktur(ST) mit einer Mehrzahl von Parametern (xᵢ) existiert, dabei ist der Dialogbereich (3) ausgestaltet die Parameter (xᵢ) anzuzeigen und vom Anwender anzupassen, zu ändern oder zu ergänzen, weiterhin ausgestaltet den parametrierten Technologiebefehl (TB) in dem entsprechenden Programmtext Abschnitt als textuelle Form zu übernehmen.

7. Eingabeumgebung (2) nach Anspruch 6, ausgestaltet den angezeigten Dialogbereich (3) bei einem Scrollen des Programmtextes gemeinsam mit dem Text zu verschieben.

8. Eingabeumgebung (2) nach Anspruch 6 oder 7, wobei der Dialogbereich (3) ausgestaltet ist, eine funktionale Sicht auf die Syntax des Technologiebefehls (TB) bereitzustellen, dabei ist die Eingabeumgebung (2) weiterhin ausgestaltet Änderungen, welche mittels des Dialogbereichs (3) in der Dialogdarstellung gemacht werden, für die Textdarstellung aufzubereiten und unmittelbar bei der Eingabe synchronisiert anzuzeigen.

9. Eingabeumgebung (2) nach einem der Ansprüche 6 bis 7, weiterhin ausgestaltet die Funktionsweise und/oder eine technologische Bedeutung der Parameter (xᵢ) in einer Hilfsgrafik (5) dem Anwender (1) zu erläutern.

10. Eingabeumgebung (2) nach Anspruch 9, weiterhin ausgestaltet, dass der Anwender (1) in der Hilfsgrafik (5) durch Verschieben von Grafikelementen (G1,G2,G3), welche mit den Parametern (x₁,x₂,x₃) in einer Wechselwirkungsbeziehung stehen, die Parameterwerte zu ändern.

11. Eingabeumgebung (2) nach einem der Ansprüche 6 bis 10, ausgestaltet für die Programmierung von industriellen Steuerungen für Bearbeitungsvorgänge an einem Werkstück oder für die Bewegungssteuerung von Handhabungssystemen und/oder einem Roboter, welche eine Strecken- und Bahnsteuerung erfordern.
